# EUROPEAN PATENT SPECIFICATION

(11) **EP 1 462 656 B1**
(45) Date of publication and mention of the grant of the patent: **11.07.2012**
(21) Application number: 04250819.2
(22) Date of filing: 16.02.2004
(51) Int. Cl.: F04C 18/356, F04C 23/00, F04C 29/02, F01C 21/10

(54) **Rotary piston compressor**
Drehkolbenverdichter
Compresseur à piston rotatif

(30) Priority: 25.03.2003 JP 2003083080; 25.03.2003 JP 2003083119; 25.03.2003 JP 2003083168
(43) Date of publication of application: 29.09.2004
(73) Proprietor: SANYO ELECTRIC CO., LTD., Moriguchi-shi, Osaka 570-8677 (JP)
(72) Inventor: Kazuya, Sato, Ora-gun Gunma (JP); Kenzo, Matsumoto, Ora-gun Gunma (JP); Kentaro, Yamaguchi, Ora-gun Gunma (JP); Akifumi, Tomiuka, Isesaki-shi Gunma (JP); Hiromasa, Aoki, Tatebayashi-shi Tochigi (JP); Midori, Futakawame, Ora-gun Gunma (JP)
(74) Representative: Grey, Ian Michael

(56) References cited:
- US-A- 5 685 703
- PATENT ABSTRACTS OF JAPAN vol. 2000, no. 20, 10 July 2001 (2001-07-10) -& JP 2001 073977 A (SANYO ELECTRIC CO LTD), 21 March 2001 (2001-03-21)
- PATENT ABSTRACTS OF JAPAN vol. 016, no. 452 (M-1313), 21 September 1992 (1992-09-21) -& JP 04 159489 A (MITSUBISHI HEAVY IND LTD), 2 June 1992 (1992-06-02)
- PATENT ABSTRACTS OF JAPAN vol. 2000, no. 10, 17 November 2000 (2000-11-17) & JP 2000 205164 A (SANYO ELECTRIC CO LTD), 25 July 2000 (2000-07-25)
- PATENT ABSTRACTS OF JAPAN vol. 2003, no. 01, 14 January 2003 (2003-01-14) -& JP 2002 276578 A (MATSUSHITA ELECTRIC IND CO LTD), 25 September 2002 (2002-09-25)
- PATENT ABSTRACTS OF JAPAN vol. 012, no. 269 (M-723), 27 July 1988 (1988-07-27) -& JP 63 050696 A (TOSHIBA CORP), 3 March 1988 (1988-03-03)

## Description

### BACKGROUND OF THE INVENTION

The present invention relates to a rotary compressor equipped with first and second rotary compressing elements driven by a rotary shaft of a driving element, which are accommodated in a hermetically sealed vessel.

In this type of conventional rotary compressor, especially an internal intermediate pressure multistage compression type rotary compressor, a refrigerant gas is introduced through a suction port of the first rotary compression element into a low-pressure chamber of a cylinder wherein the refrigerant gas is compressed to have an intermediate pressure by a roller and a vane, and then discharged from a high-pressure chamber of the cylinder into the hermetically sealed vessel through the intermediary of a discharge port and a discharge muffling chamber. The refrigerant gas having the intermediate pressure in the hermetically sealed vessel is then drawn into the low-pressure chamber of the cylinder through a suction port of the second rotary compressing element and subjected to second-stage compression by the roller and the vane. This causes the refrigerant gas to turn into a hot, high-pressure refrigerant gas, which flows from the high-pressure chamber into an external radiator or the like through the intermediary of the discharge port and the discharge muffling chamber (refer to, for example, Japanese Patent No. 2507047).

The rotary shaft has an oil bore vertically formed around an axial center thereof and a horizontal lubrication bore in communication with the oil bore. Oil is drawn up from an oil reservoir located at bottom inside the hermetically sealed vessel 12 by an oil pump, serving as a lubricating device, installed at the bottom end of the rotary shaft. The oil moves up through the oil bore to be supplied to the rotary shaft and sliding portions in the rotary compressing elements through the lubrication bore, thereby to accomplish lubrication and sealing.

If a refrigerant exhibiting a considerable high/low pressure difference, such as carbon dioxide (CO₂), which is a natural refrigerant, is used in the abovementioned rotary compressor, then the refrigerant pressure reaches 12 MPaG in the second rotary compressing element, which is the high pressure side, while it reaches 8 MPaG (intermediate pressure) in the first rotary compressing element, which is the low pressure side.

In such a rotary compressor, an upper open surface of the cylinder of the second rotary compressing element is closed by a supporting member, and the lower open surface thereof is closed with an intermediate partitioner. A roller is provided in a cylinder of the second rotary compressing element. The roller is fitted to an eccentric member of the rotary shaft. For a design reason or for preventing wear on the roller, a small gap is formed between the roller and the supporting member disposed above the roller, and between the roller and the intermediate partitioner disposed under the roller. These gaps inconveniently allow a high-pressure refrigerant gas, which has been compressed by the cylinder of the second rotary compressing element, to enter into the roller (a space around the eccentric member inside the roller). Thus, the high-pressure refrigerant gas accumulates inside the roller.

The high-pressure refrigerant gas built up inside the roller causes the pressure inside the roller to become higher than the pressure (intermediate pressure) of the hermetically sealed vessel, which has its bottom portion serving as the oil reservoir. This makes it extremely difficult to supply oil to the inside of the roller from the lubrication bore through the oil bore in the rotary shaft by utilizing a pressure difference, resulting in shortage of a lubricant to the area around the eccentric member inside the roller.

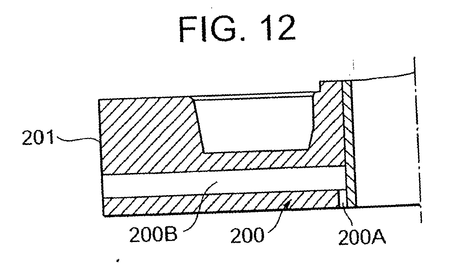

As a conventional solution to the abovementioned problem, a passage 200 that provides communication between the inside of the roller (adjacent to the eccentric member) of the second rotary compressing element and the interior of the hermetically sealed vessel has been formed in the upper supporting member 201 disposed above the cylinder of the second rotary compressing element, as shown in Fig. 12. The passage 200 releases the high-pressure refrigerant gas accumulated inside the roller into the hermetically sealed vessel so as to prevent the pressure inside the roller from rising to a high level.

However, to form the passage 200 for the communication between the inside of the roller and the hermetically sealed vessel, two passages have to be formed by machining, namely, a passage 200A formed in an inner edge portion of the upper supporting member 201 in an axial direction that opens adjacently to the inside of the roller, and a horizontal passage 200B for providing communication between the passage 200A and the hermetically sealed vessel. This has been posing a problem of increased machining cost for forming the passages with resultant higher production cost.

Furthermore, the pressure (high pressure) in the cylinder of the second rotary compressing element becomes higher than the pressure (intermediate pressure) in the hermetically sealed vessel having its bottom portion serving as the oil reservoir. This makes it extremely difficult to supply oil through the oil bore and the lubrication bore in the rotary shaft into the cylinder of the second rotary compressing element by utilizing a pressure difference. As a result, lubrication is performed only by the oil in a refrigerant drawn in, thus posing a problem of insufficient lubrication.

Furthermore, in the internal intermediate pressure multistage compression type rotary compressor, the pressure in the cylinder (high pressure) of the second rotary compressing element rises higher than the pressure in the hermetically sealed vessel (intermediate pressure) having its bottom portion serving as the oil reservoir. This makes it extremely difficult to supply oil through the oil bore in the rotary shaft into the cylinder by utilizing a pressure difference. As a result, lubrication is performed only by the oil in a refrigerant drawn in, thus posing a problem of insufficient lubrication.

Thus, the intermediate partitioner and the cylinder of the second rotary compressing element have to be provided with small bores to provide communication between the oil bore of the rotary shaft and the inlet port of the cylinder so as to supply oil to the second rotary compressing element. This, however, has been posing a problem of increased production cost because of the need for forming the small bores in the intermediate partitioner and the cylinder.

An example of a known prior art compressor is disclosed in the applicant's earlier patent application no. JP 2001 073977.

### SUMMARY OF THE INVENTION

Accordingly, the present invention has been made with a view toward solving the problems with the prior art described above, and it is an object thereof to provide a so-called internal intermediate pressure multistage compression type rotary compressor capable of restraining a pressure inside a roller from inconveniently increasing and also of permitting smooth and reliable lubrication of a cylinder of a second rotary compressing element by a relatively simple construction.

It is another object of the present invention to provide an internal intermediate pressure multistage compression type rotary compressor that allows a lubricant to be supplied smoothly and reliably into a cylinder of a second rotary compressing element, whose pressure therein reaches a high level, at low cost. According to the present invention, there is provided a rotary compressor having first and second rotary compressing elements driven by a rotary shaft of a driving element in a hermetically sealed vessel to discharge a refrigerant gas, which has been compressed by the first rotary compressing element, into the hermetically sealed vessel, and compress the discharged refrigerant gas of an intermediate pressure by the second rotary compressing element, the rotary compressor comprising a first cylinder for constituting a first rotary compressing element and a second cylinder for constituting a second rotary compressing element, a roller that is provided in each of the cylinders and fitted onto an eccentric member of the rotary shaft to eccentrically rotate, an intermediate partitioner provided between the cylinders and the rollers to partition the rotary compressing elements, supporting members that close open surfaces of the cylinders and have bearings for the rotary shaft, and an oil bore formed in the rotary shaft comprising a main axial oil bore and a radial oil bore extending from and in fluid communication with the main axial oil bore, characterised in that a surface of the intermediate partitioner that is adjacent to the second cylinder has a groove formed therein extending radially from an inner periphery to an outer periphery of the intermediate partitioner fluidly communicating the oil bore and a space around the eccentric members inside of the rollers, a gap between the intermediate partitioner and the rotary shaft, a low-pressure chamber in the second cylinder, and the hermetically sealed vessel.

Preferably, the driving element is an rpm-controlled motor started up at low speed upon actuation.

### BRIEF DESCRIPTION OF THE DRAWINGS

Figure 1 is a longitudinal sectional view of an internal intermediate pressure multistage compression type rotary compressor, not forming part of the invention but included for information only;
Figure 2 is a top plan view of an intermediate partitioner of the rotary compressor shown in Figure 1;
Figure 3 is a longitudinal sectional view of the intermediate partitioner of the rotary compressor shown in Figure 1;
Figure 4 is a top plan view of an upper cylinder of a second rotary compressing element of the rotary compressor shown in Figure 1;
Figure 5 is a diagram showing changes in pressure at an inlet end of the upper cylinder of the rotary compressor shown in Figure 1;
Figure 6 is a diagram illustrating a stroke of suction-compression of a refrigerant performed by the upper cylinder of the rotary compressor shown in Figure 1;
Figure 7 is a longitudinal sectional view of an internal intermediate pressure multistage compression type rotary compressor according to an embodiment of the present invention;
Figure 8 is a top plan view of an intermediate partitioner of the rotary compressor shown in Figure 7;
Figure 9 is a longitudinal sectional view of the intermediate partitioner of the rotary compressor shown in Figure 7;
Figure 10 is a top plan view of a cylinder of a second rotary compressing element of the rotary compressor shown in Figure 7;
Figure 11 is a diagram showing changes in pressure at an inlet end of an upper cylinder of the rotary compressor shown in Figure 7; and
Figure 12 is a longitudinal sectional view of an upper supporting member of a conventional rotary compressor.

### DESCRIPTION OF A PREFERRED EMBODIMENT

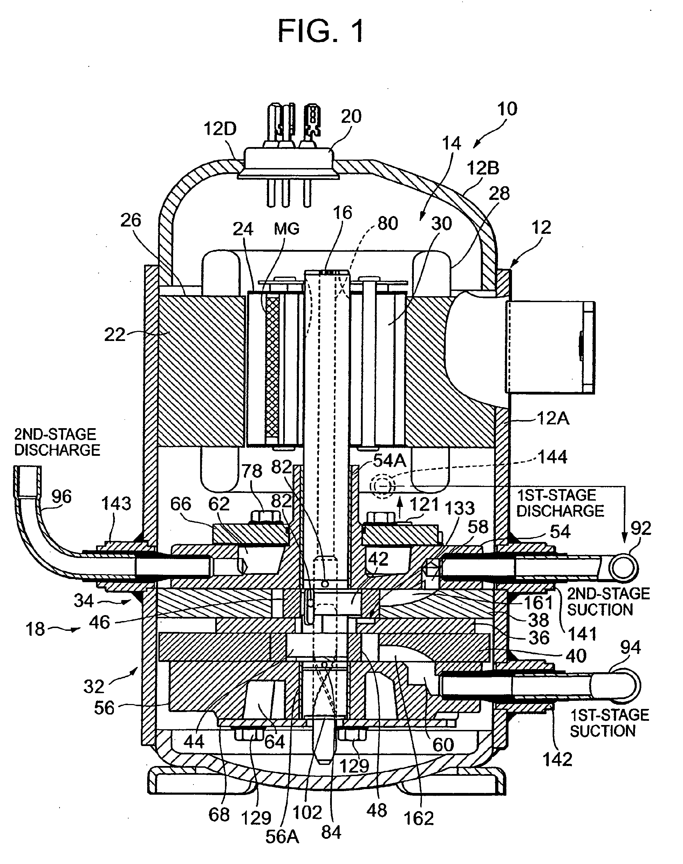

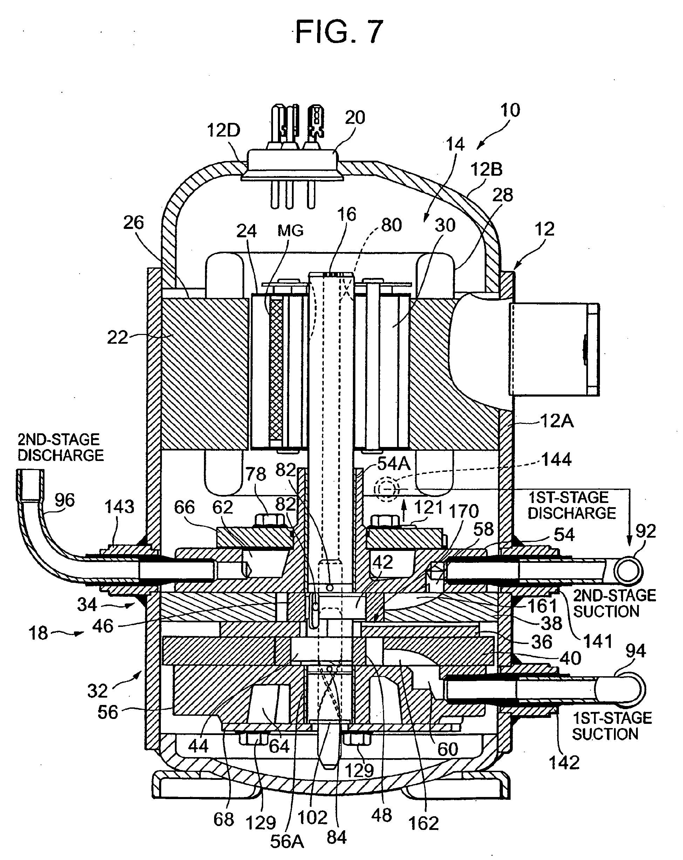

An embodiment according to the present invention will be described in detail in conjunction with Figures 7 to 11 of the attached drawings. Figure 1 is a longitudinal sectional view of an internal intermediate pressure multistage (2-stage) compression type rotary compressor 10, not forming part of the present invention, but included for information only. The rotary compressor 10 has a first rotary compressing element 32 and a second rotary compressing element 34. Referring to Figure 1, the internal intermediate pressure multistage compression type rotary compressor 10 that uses carbon dioxide (CO₂) as a refrigerant is constructed of a cylindrical hermetically sealed vessel 12 formed of a steel plate, a driving element 14 disposed at an upper side of the internal space of the hermetically sealed vessel 12, and a rotary compressing mechanism unit 18 that includes a first rotary compressing element 32 (first stage) and a second rotary compressing element 34 (second stage) that are disposed under the driving element 14 and driven by a rotary shaft 16 of the driving element 14.

The hermetically sealed vessel 12 having its bottom portion working as an oil reservoir is constructed of a vessel main body 12A accommodating the driving element 14 and the rotary compressing mechanism unit 18, and a substantially bowl-shaped end cap or cover 12B that closes an upper opening of the vessel main body 12A. A circular mounting hole 12D is formed at the center of an upper surface of the end cap 12B. A terminal (wires not shown) 20 for supplying electric power to the driving element 14 is installed in the mounting hole 12D.

The driving element 14 is a series-wound DC motor constructed of a stator 22 annularly installed along an upper inner peripheral surface of the hermetically sealed vessel 12 and a rotor 24 inserted in the stator 22 with a slight gap on the inner side. The rotor 24 is fixed to the rotary shaft 16 that extends in a vertical direction, passing through a center.

The stator 22 has a laminate 26 formed of stacked toroidal electromagnetic steel plates, and a stator coil 28 wound around teeth of the laminate 26 by a series winding (concentrated winding) method. The rotor 24 is also formed of a laminate 30 made of electromagnetic steel plates, as in the stator 22. A permanent magnet MG is inserted in the laminate 30.

An oil pump 102, serving as a lubricating device, is provided at the bottom end of the rotary shaft 16. The oil pump 102 draws up lubricating oil from the oil reservoir formed at the bottom of the hermetically sealed vessel 12. The lubricating oil passes through an oil bore 80 formed in a vertical direction along the axial center of the rotary shaft 16 and through horizontal lubrication bores 82 and 84 (formed also in upper and lower eccentric members 42 and 44) in communication with the oil bore 80 to reach sliding portions and the like of the upper and lower eccentric members 42 and 44, and the first and second rotary compressing elements 32 and 34. This restrains wear on the first and second rotary compressing elements 32 and 34, and also provides sealing.

The rotary compressing mechanism unit 18 includes a lower cylinder (first cylinder) 40 constituting the first rotary compressing element 32 and an upper cylinder (second cylinder) 38 constituting the second rotary compressing element 34, upper and lower rollers 46 and 48, which eccentrically rotate, being fitted onto the upper and lower eccentric members 42 and 44, respectively, which are provided on the rotary shaft 16 with a 180-degree phase difference in the upper and lower cylinders 38 and 40, respectively, an intermediate partitioner 36 provided between the upper and lower cylinders 38 and 40 and the rollers 46 and 48 to separate the first and second rotary compressing elements 32 and 34, a vane 50 (the lower vane being not shown) abutting against the rollers 46 and 48 to separate interiors of the upper and lower cylinders 38 and 40 into low-pressure chambers and high-pressure chambers, and an upper supporting member 54 and a lower supporting member 56 that cover the upper opening surface of the upper cylinder 38 and the lower opening surface of the lower cylinder 40, respectively, and also serve as bearings of the rotary shaft 16.

The upper supporting member 54 and the lower supporting member 56 are provided with suction passages 58 and 60 in communication with the interiors of the upper and lower cylinders 38 and 40, respectively, through suction ports 161 and 162, respectively, and discharge muffling chambers 62 and 64 partly formed by recessions that are closed by an upper cover 66 and a lower cover 68, respectively. A bearing 54A is protuberantly formed at the center of the upper supporting member 54 and a bearing 56A is protuberantly formed at the center of the lower supporting member 56 to support the rotary shaft 16.

The lower cover 68 formed of a toroidal steel plate is fixed to the lower supporting member 56 from below by main bolts 129 at four peripheral locations. Distal ends of the main bolts 129 are screwed into the upper supporting member 54.

The discharge muffling chamber 64 of the first rotary compressing element 32 and the interior of the hermetically sealed vessel 12 are in communication through a communication passage. The communication passage is formed of a bore (not shown) that penetrates the lower supporting member 56, the upper supporting member 54, the upper cover 66, the upper and lower cylinders 38 and 40, and the intermediate partitioner 36. In this case, an intermediate discharge pipe 121 is vertically provided at the upper end of the communication passage, and an intermediate-pressure refrigerant is discharged through the intermediate discharge pipe 121 into the hermetically sealed vessel 12.

The upper cover 66 closes the upper surface opening of the discharge muffling chamber 62 in communication with the interior of the upper cylinder 38 of the second rotary compressing element 34 through a discharge port 39. The driving element 14 is provided above the upper cover 66 with a predetermined gap therebetween in the hermetically sealed vessel 12. A peripheral portion of the upper cover 66 is fixed to the upper supporting member 54 from above by four main bolts 78. The distal ends of the main bolts 78 are screwed in the lower supporting members 56.

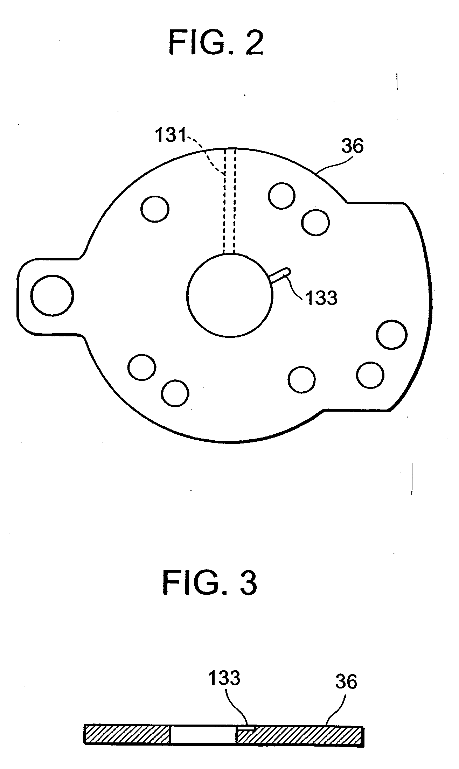

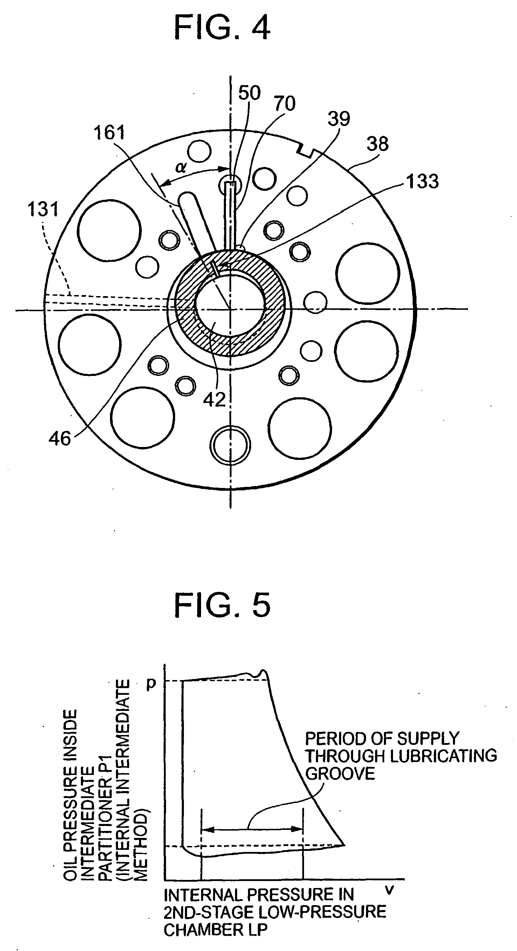

The intermediate partitioner 36 has a through bore 131 providing communication between the interior of the hermetically sealed vessel 12 and inside the roller 46 by small-diameter boring, as shown in Figs. 2 and 4. Fig. 2 is a top plan view of the intermediate partitioner 36, and Fig. 4 is a top plan view of the upper cylinder 38 of the second rotary compressing element 34. An accommodating chamber 70 is formed in the upper cylinder 38. The vane 50 is housed in the accommodating chamber 70 and abutted against the roller 46. One side (right side in Fig. 4) of the vane 50 has the discharge port 39, while the other side (left) with the vane 50 therebetween has the suction port 161. The vane 50 separates compression chambers formed between the upper cylinder 38 and the roller 46 into low-pressure chambers LR and high-pressure chambers HR. The suction port 161 is associated with the low-pressure chambers LR, while the discharge port 39 is associated with the high-pressure chambers HR.

A small gap is formed between the intermediate partitioner 36 and the rotary shaft 16, an upper side of the gap being in communication with the inside of the roller 46 (the space around the eccentric member 42 inside the roller 46). Furthermore, a lower side of the gap between the intermediate partitioner 36 and the rotary shaft 16 is in communication with the inside of the roller 48 (the space around the eccentric member 44 inside the roller 48). The through bore 131 serves as a passage for releasing, into the hermetically sealed vessel 12, a high-pressure refrigerant gas that leaks into the roller 46 (the space around the eccentric member 42 inside the roller 46) through a gap formed between the roller 46 in the cylinder 38 and the upper supporting member 54 closing the upper open surface of the cylinder 38 or the intermediate partitioner 36 closing the lower open surface, and then flows into the gap between the intermediate partitioner 36 and the rotary shaft 16 and inside the roller 48.

The high-pressure refrigerant gas leaking inside the roller 46 passes through the gap between the intermediate partitioner 36 and the rotary shaft 16 and enters the through bore 131, thus flowing out into the hermetically sealed vessel 12.

Thus, the high-pressure refrigerant gas leaking inside the roller 46 can be released through the through bore 131 into the hermetically sealed vessel 12. This makes it possible to avoid the inconvenience of the high-pressure refrigerant gas accumulating inside the roller 46, in the gap between the intermediate partitioner 36 and the rotary shaft 16, and inside the roller 48. With this arrangement, oil can be supplied inside the roller 46 and the roller 48 through the lubrication bores 82 and 84 of the rotary shaft 16 by making use of a pressure difference.

An increase in machining cost can be minimized particularly because a high-pressure refrigerant gas leaked into the roller 46 can be released into the hermetically sealed vessel 12 simply by forming the through bore 131 horizontally penetrating the intermediate partitioner 36.

The surface of the intermediate partitioner 36 that is adjacent to the cylinder 38 has a lubrication groove 133 extending from the inner peripheral surface over a predetermined distance in a radial direction, as shown in Fig. 2 to Fig. 4. The lubrication groove 133 is formed under an area α extending from a position where the vane 50 of the cylinder 38 shown in Fig. 4 abuts against the roller 46 to an edge on the opposite side from the vane 50 of the suction port 161. An outer portion of the lubrication groove 133 is in communication with the low-pressure chamber LR of the cylinder 38.

An opening on the inner peripheral surface side of the lubrication groove 133 of the intermediate partitioner 36 is in communication with the oil bore 80 through the intermediary of the lubrication bores 82 and 84. Thus, the lubrication groove 133 provides communication between the oil bore 80 and the low-pressure chamber LR in the upper cylinder 38.

As will be discussed later, the hermetically sealed vessel 12 will have an intermediate pressure therein, so that supply of oil into the upper cylinder 38, which is the second stage and will have a high pressure therein, is difficult. However, the lubrication groove 133 formed in the intermediate partitioner 36 allows oil drawn up by the oil pump 102 from the oil reservoir at the inner bottom of the hermetically sealed vessel 12 to move up in the oil bore 80 into the lubrication bores 82 and 84, and then enter the lubrication groove 133 of the intermediate partitioner 36, thus being supplied to the low-pressure chamber LR of the upper cylinder 38.

Fig. 5 shows changes in pressure in the upper cylinder 38, P1 in the diagram denoting a pressure on the inner peripheral side of the intermediate partitioner 36. The internal pressure (suction pressure) of the low-pressure chamber LR of the upper cylinder 38 denoted by LP in the diagram drops lower than the pressure P1 on the inner peripheral surface side of the intermediate partitioner 36 due to a suction pressure loss in a suction stroke. During that particular period, oil is injected through the oil bore 80 of the rotary shaft 16 into the low-pressure chamber LR in the upper cylinder 38 through the lubrication groove 133 of the intermediate partitioner 36, thus accomplishing lubrication.

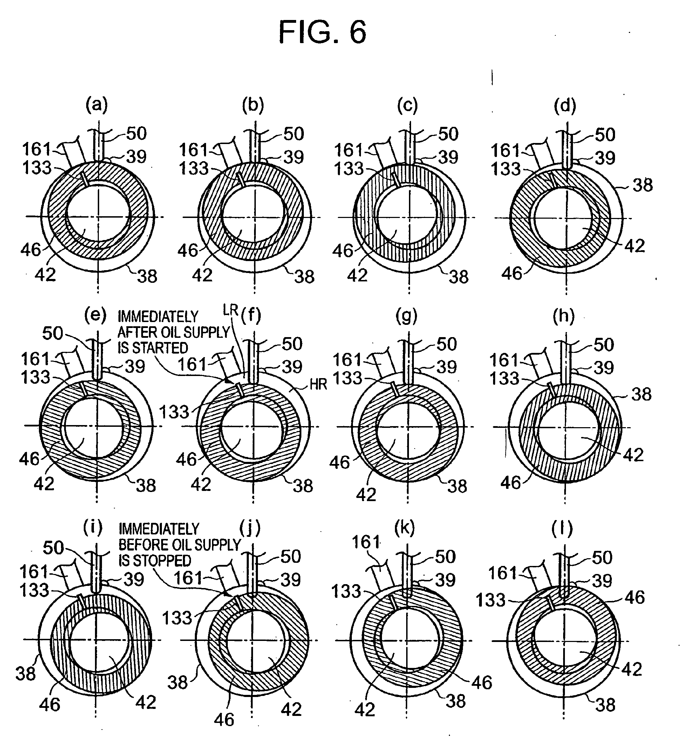

Fig. 6A through Fig. 6L illustrate a refrigerant suction-compression stroke of the upper cylinder 38 of the second rotary compressing element 34. If it is assumed that the eccentric member 42 of the rotary shaft 16 rotates counterclockwise in the figures, then the suction port 161 is closed by the roller 46 in Figs. 6A and 6B. In Fig. 6C, the suction port 161 opens and suction of a refrigerant is begun, while a refrigerant is being discharged at the opposite side. The suction of the refrigerant continues during the steps of Figs. 6C to 6E. During this period, the lubrication groove 133 is covered by the roller 46.

In Fig. 6F, the roller 46 exposes the lubrication groove 133, so that the oil is drawn into the low-pressure chamber LR surrounded by the vane 50 and the roller 46 in the upper cylinder 38, beginning the lubrication (the beginning of the supply period shown in Fig. 5). From steps shown in Figs. 6G to 6I, the suction of the oil is performed. The lubrication continues until the upper side of the lubrication groove 133 is covered by the roller 46 in Fig. 6J, thus stopping the lubrication (the end of the supply period shown in Fig. 5). From steps shown in Figs. 6K through 6L to Figs. 6A and 6B, suction of a refrigerant is carried out. Thereafter, the refrigerant will be compressed and discharged through the discharge port 39.

Thus, even if the pressure in the upper cylinder 38 of the second rotary compressing element 34 becomes higher than the intermediate pressure in the hermetically sealed vessel 12, the lubrication groove 133 allows oil to be securely supplied into the upper cylinder 38 by making use of a suction pressure loss during a suction stroke in the second rotary compressing element 34.

With this arrangement, the second rotary compressing element 34 can be securely lubricated, permitting performance to be secured and reliability to be improved. In particular, oil can be supplied into the upper cylinder 38 of the second rotary compressing element 34 simply by forming the groove in the surface of the intermediate partitioner 36 that is adjacent to the cylinder 38. This obviates the need for forming thin bores in the intermediate partitioner 36 and the upper cylinder 38, as in the prior art. With this arrangement, the construction can be simplified, so that an increase in production cost can be restrained.

Moreover, a bore for releasing high pressures (the through bore 131) formed inside the roller 46, and the groove for supplying oil (the lubrication groove 133) are separately formed, so that the configuration of the lubrication groove 133 for supplying oil can be changed as desired. This means that, if a groove or bore is to be used to release high pressures inside the roller 46 and also to supply oil, then the groove or the bore has to have a certain size or diameter to release the high pressures inside the roller 46. An excessively small diameter of the groove or bore would fail to adequately release a high-pressure gas accumulating inside the roller 46. On the other hand, an excessively large diameter thereof would cause excessive oil to be supplied and discharged from the compressor 10, and may adversely affecting a refrigerant cycle or cause shortage of oil in the compressor 10.

The high pressure releasing bore (the through bore 131) inside the roller 46 and the oil supplying groove (the lubrication groove 133) are separately formed, so that the groove diameter of the through bore 131 and the size of the lubrication groove 133 can be freely adjusted. Furthermore, the amount of oil supplied to the low-pressure chamber LR of the upper cylinder 38 can be adjusted by adjusting the size of the lubrication groove 133.

Thus, high pressure inside the roller 46 can be released and oil can be supplied to the upper cylinder 38 of the second rotary compressing element 34 at low cost. In addition, secured performance and higher reliability of the rotary compressor 10 can be achieved.

In this case, carbon dioxide (CO₂), which is a natural refrigerant gentle to the global environment, is used, considering flammability, toxicity, etc. Oil sealed in the hermetically sealed vessel 12 as a lubricant may be an existing oil, such as a mineral oil, alkyl benzene oil, ether oil, ester oil, and polyalkylene glycol (PAG).

A side surface of the vessel main body 12A of the hermetically sealed vessel 12 has sleeves 141, 142, 143, and 144 welded and fixed at positions matching the positions of the suction passages 58 and 60 of the upper supporting member 54 and the lower supporting member 56, the discharge muffling chamber 62, and above the upper cover 66 (a position substantially matching the bottom end of the driving element 14), respectively. The sleeves 141 and 142 are vertically adjacent, while the sleeve 143 is positioned substantially on a diagonal line with respect to the sleeve 141. Positionally, the sleeve 144 and the sleeve 141 are shifted by about 90 degrees.

One end of a refrigerant introduction pipe 92 for introducing a refrigerant gas into the upper cylinder 38 is inserted in and connected to the sleeve 141, and the end of the refrigerant introduction pipe 92 is in communication with the suction passage 58 of the upper cylinder 38. The refrigerant introduction pipe 92 is routed above the hermetically sealed vessel 12 to the sleeve 144, the other end thereof being inserted in and connected to the sleeve 144 to be in communication with the interior of the hermetically sealed vessel 12.

One end of the refrigerant introduction pipe 94 for introducing a refrigerant gas into the lower cylinder 40 is inserted in and connected to the sleeve 142, the one end of the refrigerant introduction pipe 94 being in communication with the suction passage 60 of the lower cylinder 40. A refrigerant discharge pipe 96 is inserted in and connected to the sleeve 143, one end of the refrigerant discharge pipe 96 being in communication with the discharge muffling chamber 62.

An operation of the rotary compressor 10 having the aforementioned construction will now be described. Energizing the stator coil 28 of the driving element 14 via the terminal 20 and the wires (not shown) actuates the driving element 14 to rotate the rotor 24. This causes the upper and lower rollers 46 and 48 to eccentrically rotate in the upper and lower cylinders 38 and 40, respectively, the rollers 46 and 48 being fitted to the upper and lower eccentric members 42 and 44, respectively, that are integrally formed with the rotary shaft 16.

A refrigerant gas of a low pressure (4 MPaG) drawn into the low-pressure chamber of the lower cylinder 40 through the suction port 162 via the refrigerant introduction pipe 94 and the suction passage 60 formed in the lower supporting member 56 is compressed to have an intermediate pressure (8 MPaG) by the roller 48 and a vane (not shown), passes through the discharge port 41 from the high-pressure chamber of the lower cylinder 40 into the discharge muffling chamber 64 formed in the lower supporting member 56, and then it is discharged into the hermetically sealed vessel 12 through the intermediate discharge pipe 121 via a communication passage (not shown).

Then, the intermediate-pressure refrigerant gas in the hermetically sealed vessel 12 leaves the sleeve 144, passes through the refrigerant introduction pipe 92 and the suction passage 58 formed in the upper supporting member 54, and reaches the low-pressure chamber LR of the upper cylinder 38 through the suction port 161. The intermediate-pressure refrigerant gas that has been drawn in is subjected to the second-stage compression explained with reference to Fig. 6 by the roller 46 and the vane 50 so as to turn into a hot, high-pressure refrigerant gas (the pressure being about 12 MPaG). The hot, high-pressure refrigerant gas flows from the high-pressure chamber HR, passes through the discharge port 39, the discharge muffling chamber 62 formed in the upper supporting member 54, and the refrigerant discharge pipe 96, and then it is discharged to an external radiator or the like of the compressor 10.

Thus, the lubrication groove 133 formed in the surface of the intermediate partitioner 36 that is adjacent to the cylinder 38 provides communication between the oil bore 80 and the low-pressure chamber LR of the cylinder 38 through the lubrication bores 82 and 84, so that even if the pressure in the cylinder 38 of the second rotary compressing element 34 becomes higher than the intermediate pressure in the hermetically sealed vessel 12, the lubrication groove 133 allows oil to be securely supplied into the low-pressure chamber of the cylinder 38 by making use of a suction pressure loss during a suction stroke in the second rotary compressing element 34.

The through bore 131 drilled in the intermediate partitioner 36 provides communication between the interior of the hermetically sealed vessel 12 and the inside of the roller 46, so that a high-pressure refrigerant gas leaked into the inside of the roller 46 can be released into the hermetically sealed vessel 12 through the through bore 131.

With this arrangement, oil is smoothly supplied to the inside of the roller 46 and the roller 48 through the lubrication bores 82 and 84 of the rotary shaft 16 by making use of a pressure difference. This makes it possible to avoid shortage of oil around the eccentric member 42 inside the roller 46 and around the eccentric member 44 inside the roller 48.

Thus, the inconvenience of the pressure inside the roller 46 becoming high can be avoided, and smooth and reliable lubrication of the second rotary compressing element 34 can be achieved by the relatively simple construction. This feature allows the rotary compressor 10 to achieve secured performance and higher reliability.

In the present non-claimed example, the upper side of the gap formed between the intermediate partitioner 36 and the rotary shaft 16 is in communication with the inside of the roller 46, while the lower side thereof is in communication with the inside of the roller 48. Alternatively, however, only the upper side of the gap formed between the intermediate partitioner 36 and the rotary shaft 16 may be in communication with the inside of the roller 46, that is, the lower side thereof may not be in communication with the inside of the roller 48. Further alternatively, the inside of the roller 46 and the inside of the roller 48 may be separated by the intermediate partitioner 36. In this case also, a high pressure inside the roller 46 can be released into the hermetically sealed vessel 12 by forming a bore in an axial direction that is in communication with the inside of the roller 46 in a middle of the through bore 131 of the intermediate partitioner. Moreover, oil can be supplied to the suction end of the second rotary compressing element 32 through the lubrication bore 82.

As explained in detail above, a so-called internal intermediate pressure multistage compression type rotary compressor is equipped with: a first cylinder for constituting a first rotary compressing element and a second cylinder for constituting a second rotary compressing element; a roller that is provided in each of the cylinders and fitted onto an eccentric member of the rotary shaft to eccentrically rotate; an intermediate partitioner provided between the cylinders and the rollers to partition the rotary compressing elements; supporting members that close open surfaces of the cylinders and have bearings for the rotary shaft; and an oil bore formed in the rotary shaft, wherein a surface of the intermediate partitioner that is adjacent to the second cylinder has a groove for communication between the oil bore and a low-pressure chamber in the second cylinder, and the intermediate partitioner has a through bore for communication between an interior of a hermetically sealed vessel and inside the rollers. The through bore formed in the intermediate partitioner allows a high-pressure refrigerant gas accumulating inside the rollers to be released into the hermetically sealed vessel.

With this arrangement, oil is smoothly supplied into the rollers through the oil bore of the rotary shaft by making use of a pressure difference, so that shortage of oil around the eccentric members inside the rollers can be avoided.

In addition, even if the pressure in the second cylinder of the second rotary compressing element becomes higher than that in the hermetically sealed vessel having an intermediate pressure, a suction pressure loss generated in the course of suction in the second rotary compressing element can be utilized to reliably supply oil into the low-pressure chamber of the second cylinder of the second rotary compressing element through the oil bore of the rotary shaft via the groove formed in the intermediate partitioner.

Thus, the inconvenience of the pressure inside a roller becoming high can be avoided, and reliable lubrication of a second rotary compressing element can be achieved by the relatively simple construction. This feature allows the rotary compressor to achieve secured performance and higher reliability.

Fig. 7 is a longitudinal sectional view of an internal intermediate pressure multistage (2-stage) compression type rotary compressor 10, which is an embodiment of a rotary compressor in accordance with the present invention. The rotary compressor 10 has a first rotary compressing element 32 and a second rotary compressing element 34.

Referring to Fig. 7, the internal intermediate pressure multistage compression type rotary compressor 10 that uses carbon dioxide (CO₂) as a refrigerant is constructed of a cylindrical hermetically sealed vessel 12 formed of a steel plate, a driving element 14 disposed at an upper side of the internal space of the hermetically sealed vessel 12, and a rotary compressing mechanism unit 18 that includes a first rotary compressing element 32 (first stage) and a second rotary compressing element 34 (second stage) that are disposed under the driving element 14 and driven by a rotary shaft 16 of the driving element 14.

The hermetically sealed vessel 12 having its bottom portion working as an oil reservoir is constructed of a vessel main body 12A accommodating the driving element 14 and the rotary compressing mechanism unit 18, and a substantially bowl-shaped end cap or cover 12B that closes an upper opening of the vessel main body 12A. A circular mounting hole 12D is formed at the center of an upper surface of the end cap 12B. A terminal (wires not shown) 20 for supplying electric power to the driving element 14 is installed in the mounting hole 12D.

The driving element 14 is a series-wound DC motor constructed of a stator 22 annularly installed along an upper inner peripheral surface of the hermetically sealed vessel 12 and a rotor 24 inserted in the stator 22 with a slight gap on the inner side. The rotational speed and torque of the driving element 14 is controlled by an inverter. The rotational speed of the driving element 14 is controlled by the inverter so that the driving element 14 is actuated at low speed when starting up the rotary compressor 10, and then increased to a desired speed. The rotor 24 is fixed to the rotary shaft 16 that extends in a vertical direction, passing through a center.

The stator 22 has a laminate 26 formed of stacked toroidal electromagnetic steel plates, and a stator coil 28 wound around teeth of the laminate 26 by a series winding (concentrated winding) method. The rotor 24 is also formed of a laminate 30 made of electromagnetic steel plates, as in the stator 22. A permanent magnet MG is inserted in the laminate 30.

An oil pump 102, serving as a lubricating device, is provided at the bottom end of the rotary shaft 16. The oil pump 102 sucks up lubricating oil from the oil reservoir formed at the bottom of the hermetically sealed vessel 12. The lubricating oil passes through an oil bore 80 formed in a vertical direction along the axial center of the rotary shaft 16 and through horizontal lubrication bores 82 and 84 (formed also in upper and lower eccentric members 42 and 44) in communication with the oil bore 80 to reach sliding portions and the like of the upper and lower eccentric members 42 and 44, and the first and second rotary compressing elements 32 and 34. This restrains wear on the first and second rotary compressing elements 32 and 34, and provides sealing.

The rotary compressing mechanism unit 18 includes a lower cylinder (first cylinder) 40 constituting the first rotary compressing element 32 and an upper cylinder (second cylinder) 38 constituting the second rotary compressing element 34, upper and lower rollers 46 and 48, which eccentrically rotate, being fitted onto the upper and lower eccentric members 42 and 44, respectively, which are provided on the rotary shaft 16 with a 180-degree phase difference in the upper and lower cylinders 38 and 40, respectively, an intermediate partitioner 36 provided between the cylinders 38 and 40 and the rollers 46 and 48 to separate the first and second rotary compressing elements 32 and 34, a vane 50 (the lower vane being not shown) abutting against the rollers 46 and 48 to separate interiors of the upper and lower cylinders 38 and 40 to low-pressure chambers and high-pressure chambers, and an upper supporting member 54 and a lower supporting member 56 that cover the upper opening surface of the upper cylinder 38 and the lower opening surface of the lower cylinder 40, respectively, and also serve as bearings of the rotary shaft 16.

The upper supporting member 54 and the lower supporting member 56 are provided with suction passages 58 and 60 in communication with the interiors of the upper and lower cylinders 38 and 40, respectively, through suction ports 161 and 162, respectively, and discharge muffling chambers 62 and 64 partly formed by recessions that are closed by an upper cover 66 and a lower cover 68, respectively. A bearing 54A is protuberantly formed at the center of the upper supporting member 54 and a bearing 56A is protuberantly formed at the center of the lower supporting member 56 to support the rotary shaft 16.

The lower cover 68 is formed of a toroidal steel plate and fixed to the lower supporting member 56 from below by main bolts 129 at four peripheral locations. Distal ends of the main bolts 129 are screwed into the upper supporting member 54.

The discharge muffling chamber 64 of the first rotary compressing element 32 and the interior of the hermetically sealed vessel 12 are in communication through a communication passage. The communication passage is formed of a bore (not shown) that penetrates the lower supporting member 56, the upper supporting member 54, the upper cover 66, the upper and lower cylinders 38 and 40, and the intermediate partitioner 36. In this case, an intermediate discharge pipe 121 is vertically provided at the upper end of the communication passage, and an intermediate-pressure refrigerant is discharged through the intermediate discharge pipe 121 into the hermetically sealed vessel 12.

The upper cover 66 closes the upper surface opening of the discharge muffling chamber 62 in communication with the interior of the upper cylinder 38 of the second rotary compressing element 34 through a discharge port 39. The driving element 14 is provided above the upper cover 66 with a predetermined gap therebetween in the hermetically sealed vessel 12. A peripheral portion of the upper cover 66 is fixed to the upper supporting member 54 from above by four main bolts 78. The distal ends of the main bolts 78 are screwed in the lower supporting members 56.

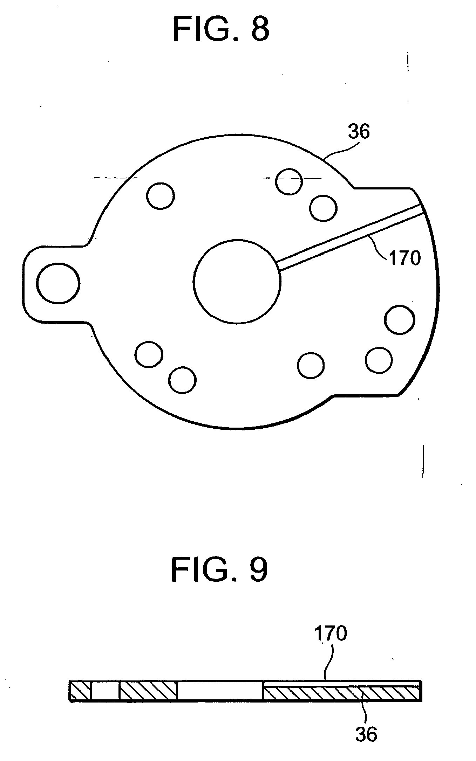

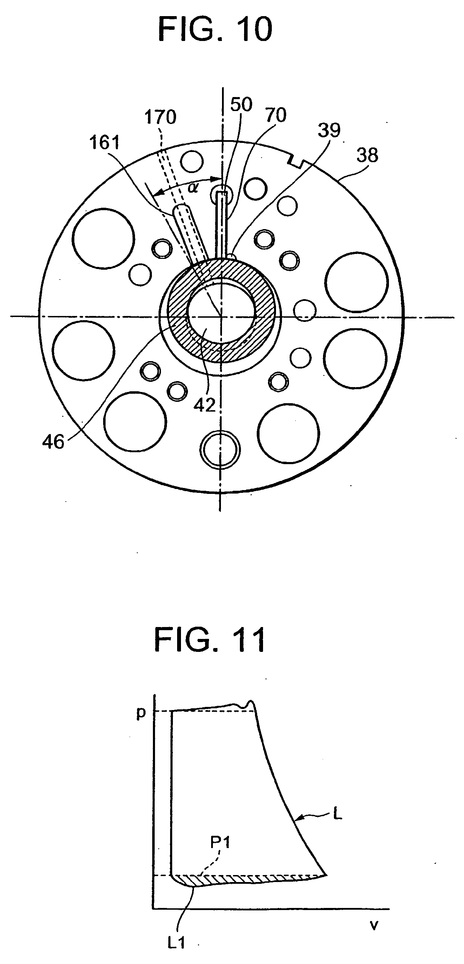

The surface of the intermediate partitioner 36 that is adjacent to the cylinder 38 has a through groove 170 that extends from the inner periphery to the outer periphery of the intermediate partitioner 36, as shown in Fig. 8 and Fig. 10. The through groove 170 provides communication between lubrication bores 82, 84 in communication with an oil bore 80, and the inside of the roller 46 and the low-pressure chamber of the cylinder 38. Fig. 8 is a top plan view of the intermediate partitioner 36, Fig. 9 is a longitudinal sectional view of the intermediate partitioner 36, and Fig. 10 is a top plan view of the upper cylinder 38.

A small gap is formed between the intermediate partitioner 36 and the rotary shaft 16, an upper side of the gap being in communication with the inside of the roller 46 (the space around the eccentric member 42 inside the roller 46). Furthermore, the gap between the intermediate partitioner 36 and the rotary shaft 16 has its lower side in communication with the inside of the roller 48 (the space around the eccentric member 44 inside the roller 48). The low-pressure chamber of the cylinder 38 and the inner periphery of the intermediate partitioner 36 are in communication through the through groove 170, as shown in Fig. 9. The through groove 170 is formed beneath an area α extending from a position where the vane 50 of the upper cylinder 38 shown in Fig. 10 abuts against the roller 46 to an edge on the opposite side from the vane 50 of the suction port 161.

A high-pressure refrigerant gas that leaks inside the roller 46 (the space around the eccentric member 42 inside the roller 46) through the gap formed between the roller 46 in the cylinder 38 and the upper supporting member 54 that closes the upper opening surface of the cylinder 38 or the intermediate partitioner 36 that closes the lower opening surface thereof, and flows into the gap between the intermediate partitioner 36 and the rotary shaft 16 and inside the roller 48 can be released into the hermetically sealed vessel 12 through the through groove 170.

In other words, the high-pressure refrigerant gas leaking inside the roller 46 passes through the gap formed between the intermediate partitioner 36 and the rotary shaft 16, enters the through groove 170, and flows into the hermetically sealed vessel 12 via the through groove 170.

Thus, the high-pressure refrigerant gas leaking inside the roller 46 can be released through the through groove 170 into the hermetically sealed vessel 12. This makes it possible to avoid the inconvenience of the high-pressure refrigerant gas accumulating inside the roller 46, in the gap between the intermediate partitioner 36 and the rotary shaft 16, and inside the roller 48. With this arrangement, oil can be supplied inside the roller 46 and the roller 48 through the lubrication bores 82 and 84 of the rotary shaft 16 by making use of a pressure difference.

An increase in machining cost can be minimized particularly because a high-pressure refrigerant gas leaked inside the roller 46 can be released into the hermetically sealed vessel 12 simply by forming the through groove 170 horizontally penetrating the intermediate partitioner 36.

The rotary shaft 16 includes the oil bore 80 formed in the vertical direction along an axial center and horizontal lubrication bores 82 and 84 (formed also in the upper and lower eccentric members 42 and 44) that are in communication with the oil bore 80. The inner periphery of the through groove 170 of the intermediate partitioner 36 is in communication with the oil bore 80 via the lubrication bores 82 and 84. Thus, the through groove 170 provides communication between the oil bore 80 and the low-pressure chamber in the cylinder 38 via the lubrication bores 82 and 84.

In this case, as will be discussed hereinafter, the inside of the hermetically sealed vessel 12 has an intermediate pressure, so that it is difficult to supply oil into the upper cylinder 38 that has a high pressure in the second stage. However, the through groove 170 formed in the intermediate partitioner 36 causes the oil to be drawn up from the oil reservoir at the bottom in the hermetically sealed vessel 12 and moved up through the oil bore 80. The oil coming out of the lubrication bores 82 and 84 enters the through groove 170 of the intermediate partitioner 36 so as to be supplied to the low-pressure chamber (suction side) of the upper cylinder 38.

Fig. 11 shows changes in pressure in the upper cylinder 38, P1 in the diagram denoting a pressure on the inner peripheral side of the intermediate partitioner 36. The internal pressure (suction pressure) of the low-pressure chamber of the upper cylinder 38 in the diagram drops below the pressure P1 on the inner peripheral side of the intermediate partitioner 36 due to a suction pressure loss in a suction stroke. During that particular period, oil is injected through the oil bore 80 of the rotary shaft 16 into the low-pressure chamber in the upper cylinder 38 through the through groove 170 of the intermediate partitioner 36, thus accomplishing lubrication.

As described above, the through groove 170 allows the high-pressure refrigerant gas leaking inside the roller 46 to be released into the hermetically sealed vessel 12. In addition, even if the pressure in the cylinder 38 of the second rotary compressing element 34 becomes higher than that in the hermetically sealed vessel 12 whose pressure reaches an intermediate pressure, a suction pressure loss in the course of suction in the second rotary compressing element 34 can be utilized to reliably supply oil into the cylinder 38.

Moreover, simply forming the through groove 170 extending from the inner periphery to the outer periphery of the intermediate partitioner 36 makes it possible to release high pressures inside the roller 46 and also to reliably supply oil to the second rotary compressing element 34. This obviates the conventional need for separately providing a bore for releasing high pressures in the roller 46 and a bore for supplying oil to the second rotary compressing element 34, or for forming the bores for supplying oil in the two members, namely, the intermediate partitioner 36 and the cylinder 38. Thus, improved performance and higher reliability of a compressor can be achieved with a simple structure and at low cost.

In summary, the problem in that the pressure inside the roller 46 of the second rotary compressing element becomes high can be solved, and the lubrication of the second rotary compressing element 34 can be reliably accomplished, thus permitting the rotary compressor 10 to provide secured performance and improved reliability.

Furthermore, as mentioned above, the rotational speed of the driving element 14 is controlled by an inverter so as to be started up at low speed when actuating the compressor. Therefore, at the startup of the rotary compressor 10, it is possible to restrain adverse effect caused by compressing a liquid when oil is drawn in from the oil reservoir at the inner bottom of the hermetically sealed vessel 12 through the through groove 170, permitting deterioration of reliability to be avoided.

In this embodiment also, carbon dioxide (CO₂), which is a natural refrigerant gentle to the global environment, is used, considering flammability, toxicity, etc. Oil sealed in the hermetically sealed vessel 12 as a lubricant may be an existing oil, such as a mineral oil, alkyl benzene oil, ether oil, ester oil, and polyalkylene glycol (PAG).

A side surface of the vessel main body 12A of the hermetically sealed vessel 12 has sleeves 141, 142, 143, and 144 welded and fixed at positions matching the positions of the suction passages 58 and 60 of the upper supporting member 54 and the lower supporting member 56, the discharge muffling chamber 62, and above the upper cover 66 (a position substantially matching the bottom end of the driving element 14), respectively. The sleeves 141 and 142 are vertically adjacent, while the sleeve 143 is positioned substantially on a diagonal line with respect to the sleeve 141. Positionally, the sleeve 144 and the sleeve 141 are shifted by about 90 degrees.

One end of a refrigerant introduction pipe 92 for introducing a refrigerant gas into the upper cylinder 38 is inserted in and connected to the sleeve 141, and the end of the refrigerant introduction pipe 92 is in communication with the suction passage 58 of the upper cylinder 38. The refrigerant introduction pipe 92 is routed above the hermetically sealed vessel 12 to the sleeve 144, the other end thereof being inserted in and connected to the sleeve 144 to be in communication with the interior of the hermetically sealed vessel 12.

One end of the refrigerant introduction pipe 94 for introducing a refrigerant gas into the lower cylinder 40 is inserted in and connected to the sleeve 142, the one end of the refrigerant introduction pipe 94 being in communication with the suction passage 60 of the lower cylinder 40. A refrigerant discharge pipe 96 is inserted in and connected to the sleeve 143, one end of the refrigerant discharge pipe 96 being in communication with the discharge muffling chamber 62.

An operation of the rotary compressor 10 having the aforementioned construction will now be described. Before the rotary compressor 10 is started up, the oil level (oil surface) in the hermetically sealed vessel 12 is normally above an opening of the through groove 170 formed in the intermediate partitioner 36, the opening being adjacent to the hermetically sealed vessel 12. This causes the oil in the hermetically sealed vessel 12 to flow into the through groove 170 from the opening of the through groove 170 that is adjacent to the hermetically sealed vessel 12.

Energizing the stator coil 28 of the driving element 14 by the inverter via the terminal 20 and the wires (not shown) actuates the driving element 14 to rotate the rotor 24. As mentioned above, the speed is low at the startup, and then increased. This causes the upper and lower rollers 46 and 48 to eccentrically rotate in the upper and lower cylinders 38 and 40, respectively, the rollers 46 and 48 being fitted to the upper and lower eccentric members 42 and 44, respectively, that are integrally formed with the rotary shaft 16.

A refrigerant gas of a low pressure (4 MPaG) drawn into the low-pressure chamber of the lower cylinder 40 through the suction port 162 via the refrigerant introduction pipe 94 and the suction passage 60 formed in the lower supporting member 56 is compressed to have an intermediate pressure (8 MPaG) by the roller 48 and a vane (not shown), passes through the discharge port 41 from the high-pressure chamber of the lower cylinder 40 into the discharge muffling chamber 64 formed in the lower supporting member 56, and then it is discharged into the hermetically sealed vessel 12 through the intermediate discharge pipe 121 via a communication passage (not shown).

Then, the intermediate-pressure refrigerant gas in the hermetically sealed vessel 12 leaves the sleeve 144, passes through the refrigerant introduction pipe 92 and the suction passage 58 formed in the upper supporting member 54, and reaches the low-pressure chamber of the upper cylinder 38 through the suction port 161.

When the rotary compressor 10 is activated, the oil that has entered from the opening of the through groove 170 adjacent to the hermetically sealed vessel 12 is drawn into the low-pressure chamber of the cylinder 38 of the second rotary compressing element 34. The intermediate-pressure refrigerant gas and oil drawn into the low-pressure chamber of the cylinder 38 are subjected to the second-stage compression by the roller 46 and the vane 50 so as to turn into a hot, high-pressure refrigerant gas (12 MPaG).

In this case, the oil that has entered together with the intermediate-pressure refrigerant gas from the opening of the through groove 170 adjacent to the hermetically sealed vessel 12 is also compressed. However, the rotational speed of the rotary compressor 10 is controlled by the inverter such that the rotary compressor 10 is operated at low speed at a startup, so that the torque is small. Therefore, the compressed oil hardly affects the rotary compressor 10, allowing normal operation to be performed.

The rotational speed is increased according to a predetermined control pattern, and the driving element 14 is eventually operated at a desired rotational speed. Although the oil level lowers below the through groove 170 during the operation, oil is supplied through the through groove 170 to the low-pressure chamber of the upper cylinder 38, making it possible to avoid shortage of oil supplied to the sliding portions of the second rotary compressing element 34.

Thus, the through groove 170 extending from the inner periphery to the outer periphery of the intermediate partitioner 36 is formed in the surface of the intermediate partitioner 36 adjacent to the cylinder 38 so as to provide communication among the oil bore 80, the inside of the roller 46, the low-pressure chamber of the cylinder 38, and the hermetically sealed vessel 12. With this arrangement, a high-pressure refrigerant gas leaked inside the roller 46 can be released through the through groove 170 into the hermetically sealed vessel 12.

Thus, oil is smoothly supplied inside the roller 46 and the roller 48 through the lubrication bores 82 and 84 of the rotary shaft 16 by making use of a pressure difference. This makes it possible to avoid shortage of oil around the eccentric member 42 inside the roller 46 and around the eccentric member 44 inside the roller 48.

Furthermore, even if the pressure in the cylinder 38 of the second rotary compressing element 34 becomes higher than the intermediate pressure in the hermetically sealed vessel 12, the through groove 170 allows oil to be securely supplied into the low-pressure chamber of the cylinder 38 by making use of a suction pressure loss during a suction stroke in the second rotary compressing element 34.

In summary, the problem in that the pressure inside the roller 46 becomes high can be solved, and the lubrication of the second rotary compressing element 34 can be reliably accomplished, thus permitting the rotary compressor 10 to provide secured performance and improved reliability.

Furthermore, the driving element 14 is an rpm-controlled motor activated at low speed at a startup. Therefore, at the startup of the rotary compressor 10, it is possible to restrain adverse effect caused by compressing a liquid when oil is drawn in from the oil reservoir at the inner bottom of the hermetically sealed vessel 12 through the through groove 170, permitting deterioration of reliability to be avoided.

In the present embodiment, the upper side of the gap formed between the intermediate partitioner 36 and the rotary shaft 16 is in communication with the inside of the roller 46, while the lower side thereof is in communication with the inside of the roller 48. Alternatively, however, only the upper side of the gap formed between the intermediate partitioner 36 and the rotary shaft 16 may be in communication with the inside of the roller 46, that is, the lower side thereof may not be in communication with the inside of the roller 48. Further alternatively, the inside of the roller 46 and the inside of the roller 48 may be separated by the intermediate partitioner 36. In this case also, a high pressure inside the roller 46 can be released into the hermetically sealed vessel 12 by forming a bore in an axial direction that is in communication with the inside of the roller 46 in a middle of the through groove 170 of the intermediate partitioner. Moreover, oil can be supplied to the low-pressure chamber of the cylinder 38 through the lubrication bore 82.

As explained in detail above, in the rotary compressor in accordance with the present invention, the groove extending from the inner periphery to the outer periphery of the intermediate partitioner allows a high-pressure refrigerant gas accumulating in the roller to be released into the hermetically sealed vessel.

Thus, oil is smoothly supplied inside the rollers through the lubrication bores of the rotary shaft by making use of a pressure difference. This makes it possible to avoid shortage of oil around the eccentric members inside the rollers.

Furthermore, even if the pressure in the second cylinder of the second rotary compressing element becomes higher than the intermediate pressure in the hermetically sealed vessel, the groove formed in the intermediate partitioner allows oil to be securely supplied into the low-pressure chamber of the second cylinder of the second rotary compressing element through the oil bores in the rotary shaft by making use of a suction pressure loss during a suction stroke in the second rotary compressing element.

The aforementioned construction therefore enables the rotary compressor to provide secured performance and improved reliability. In particular, a high pressure in a roller can be released and oil can be supplied to the second rotary compressing element simply by forming the groove that provides communication between the hermetically sealed vessel and the inside of the roller. This permits a simplified construction and reduced cost to be achieved.

Furthermore, the driving element is constructed of an rpm-controlled motor activated at low speed at a startup. Therefore, it is possible to restrain adverse effect caused by compressing a liquid when the second rotary compressing element draws oil in at a startup from the hermetically sealed vessel through the through groove in the intermediate partitioner in communication with the hermetically sealed vessel. This restrains the reliability of the rotary compressor from deteriorating.

As discussed above in detail, the rotary compressor in accordance with the present invention is equipped with a first cylinder for constituting a first rotary compressing element and a second cylinder for constituting a second rotary compressing element, an intermediate partitioner provided between the cylinders to partition the rotary compressing elements, supporting members that close open surfaces of the cylinders and have bearings for the rotary shaft of the driving element, and an oil bore formed in the rotary shaft, wherein a lubrication bore for communication between the oil bore and a low-pressure chamber in the second cylinder is formed in the intermediate partitioner.

With this arrangement, even if the pressure in the cylinder of the second rotary compressing element becomes higher than that in the hermetically sealed vessel whose internal pressure reaches an intermediate pressure, a suction pressure loss generated in the course of suction in the second rotary compressing element can be utilized to reliably supply oil into the cylinder through the lubrication bore formed in the intermediate partitioner.

With this arrangement, the lubrication of the second rotary compressing element can be reliably accomplished, so that secured performance and higher reliability can be accomplished. In particular, the lubrication bore can be made simply by forming a bore in the intermediate partitioner, making it possible to simplify the structure and restrain an increase of production cost.

In the embodiment described above, the 2-stage compression type rotary compressors provided with the first and second rotary compression elements have been used; however, the present invention is not limited thereto. For example, the present invention may be applied also to a multistage compression type rotary compressor equipped with rotary compression elements of three stages, four stages, or more stages.

## Claims

1. A rotary compressor (10) having first and second rotary compressing elements (32,34) driven by a rotary shaft (16) of a driving element (14) in a hermetically sealed vessel (12) to discharge a refrigerant gas, which has been compressed by the first rotary compressing element (32), into the hermetically sealed vessel (12), and compress the discharged refrigerant gas of an intermediate pressure by the second rotary compressing element (34), the rotary compressor (10) comprising a first cylinder (40) for constituting a first rotary compressing element (32) and a second cylinder (38) for constituting a second rotary compressing element (34), a roller (48,46) that is provided in each of the cylinders (40,38) and fitted onto an eccentric member (44,42) of the rotary shaft (16) to eccentrically rotate, an intermediate partitioner (36) provided between the cylinders (40,38) and the rollers (48,46) to partition the rotary compressing elements (32,34), supporting members (56,54) that close open surfaces of the cylinders (40,38) and have bearings (56A,54A) for the rotary shaft (16) and an oil bore formed in the rotary shaft (16) comprising a main axial oil bore (80) and a radial oil bore (82) extending from and in fluid communication with the main axial oil bore (80), **characterised in that** a surface of the intermediate partitioner that is adjacent to the second cylinder (38) has a groove (170) formed therein extending radially from an inner periphery to an outer periphery of the intermediate partitioner (36) fluidly communicating the oil bore (80,82) and a space between the eccentric member (42) and the roller (46) of the second cylinder (38), a gap between the intermediate partitioner (36) and the rotary shaft (16), a low-pressure chamber in the second cylinder (38), and the hermetically sealed vessel (12).

2. The rotary compressor (10) according to claim 1, wherein the driving element (14) is an rpm-controlled motor started up at low speed upon actuation.

## Patentansprüche

1. Drehkolbenverdichter (10) mit ersten und zweiten Drehkolbenverdichtungselementen (32, 34), die durch eine Drehwelle (16) eines Antriebselements (14) in einem hermetisch abgedichteten Behälter (12) angetrieben werden, um ein Kältemittelgas in den hermetisch abgedichteten Behalter (12) hinein zu entlassen, das durch das erste Drehkolbenverdichtungselement (32) verdichtet wurde und um das entlassene Kältemittelgas bei einem mittleren Druck von dem zweiten Drehkolbenverdichtungselement (34) zu verdichten, der Drehkolbenverdichter (10) umfassend einen ersten Zylinder (40), welcher ein erstes Drehkolbenverdichtungselement (32) beinhaltet und einen zweiten Zylinder (38), welcher ein zweites Drehkolbenverdichtungselement (34) festlegt, eine Rolle (48, 46), die in jedem der Zylinder (40, 38) vorgesehen ist und die in ein exzentrisch ausgebildetes Element (44, 42) der Drehwelle (16) eingepasst ist, um sich exzentrisch zu drehen, einem Zwischentrennteil (36), das zwischen den Zylindern (40, 38) und den Rollen (48, 46) angeordnet ist, um die Drehkolbenverdichtungselemente (32, 34) zu trennen, Ausbauelemente (56, 54) mit Lagereinrichtungen (56A, 54A) für die Drehwelle (16), welche offene Oberflächen der Zylinder (40, 38) schließen und eine Ölbohrung, welche in der Drehwelle (16) ausgebildet ist, umfassend eine axiale Hauptolbohrung (80) und eine radiale Ölbohrung (82), die von der axialen Hauptölbohrung (80) ausgeht und mit dieser in Flüssigkeitsverbindung steht,
**dadurch gekennzeichnet, dass**
eine Oberfläche des Zwischentrennteils, die an dem zweiten Zylinder (38) angrenzt, eine Kerbe (170) ausbildet, die radial von einem inneren Rand zu einem äußeren Rand des Trennteils (36) reicht und in Flüssigkeitsverbindung mit der Ölbohrung (80, 82) steht und einen Abstand zwischen dem exzentrischen Element (42) und der Rolle (46) des zweiten Zylinders (38), sowie eine Lücke zwischen dem Zwischentrennteil (36) und der Drehwelle (16), einer Niederdruckkammer im zweiten Zylinder (38) und dem hermetisch abgedichteten Behälter (12) aufweist

2. Drehkolbenverdichter (10) nach Anspruch 1, wobei das Antriebselement (14) ein drehzahlgesteuerter Motor ist, der bei Betätigung mit geringer Geschwindigkeit angelassen wird.

## Revendications

1. Compresseur rotatif (10) comportant des premier et deuxième éléments de compression rotatifs (32, 34) entraînés par un arbre rotatif (16) d'un élément d'entraînement (14) dans une cuve hermétiquement scellée (12) de façon à décharger un gaz réfrigérant, qui a été comprimé par le premier élément de compression rotatif (32), dans la cuve hermétiquement scellée (12), et à comprimer le gaz réfrigérant déchargé à une pression intermédiaire par le deuxième élément de compression rotatif (34), le compresseur rotatif (10) comprenant un premier cylindre (40) pour constituer un premier élément de compression rotatif (32) et un deuxième cylindre (38) pour constituer un deuxième élément de compression rotatif (34), un rouleau (48, 46) qui est disposé dans chacun des cylindres (40, 38) et disposé sur un élément excentrique (44, 42) de l'arbre rotatif (16) de façon à tourner de façon excentrique, un séparateur intermédiaire (36) disposé entre les cylindres (40, 38) et les rouleaux (48, 46) afin de séparer les éléments de compression rotatifs (32, 34), des éléments de support (56, 54) qui ferment des surfaces ouvertes des cylindres (40, 38) et qui comportent des paliers (56A, 54A) pour l'arbre rotatif (16) et un perçage d'huile formé dans l'arbre rotatif (16), comprenant un perçage d'huile axial principal (80) et un perçage d'huile radial (82) s'étendant à partir du perçage d'huile axial principal (80) et en communication vis-à-vis des fluides avec celui-ci, **caractérisé en ce qu'**une surface du séparateur intermédiaire qui est adjacente au deuxième cylindre (38) comporte une rainure (170) formée à l'intérieur de celle-ci, s'étendant radialement d'une périphérie intérieure à une périphérie extérieure du séparateur intermédiaire (36), faisant communiquer vis-à-vis des fluides le perçage d'huile (80, 82) et un espace entre l'élément excentrique (42) et le rouleau (46) du deuxième cylindre (38), un espacement entre le séparateur intermédiaire (36) et l'arbre rotatif (16), une chambre basse pression dans le deuxième cylindre (38), et la cuve hermétiquement scellée (12).

2. Compresseur rotatif (10) selon la revendication 1, dans lequel l'élément d'entraînement (14) est un moteur à vitesse de rotation commandée démarré à basse vitesse lors de l'actionnement.
